# EUROPEAN PATENT APPLICATION

(11) **EP 3 162 224 A1**
(43) Date of publication of application: **03.05.2017**
(21) Application number: 15192173.1
(22) Date of filing: 29.10.2015
(51) Int. Cl.: A23L 33/00

(54) **NUTRITIONAL DOSAGE REGIMEN FOR TRANSITION TO AND/OR MAINTENANCE OF A KETOGENIC METABOLISM IN PATIENTS**

(71) Applicant: Zyagnum AG, 60528 Frankfurt am Main (DE)
(72) Inventor: The designation of the inventor has not yet been filed
(74) Representative: CH Kilger Anwaltspartnerschaft mbB

(57) **Abstract**

The present invention relates to a nutritional product combination for use in the treatment of patients that require a physiological transition to a ketogenic metabolism and/or that require maintaining a ketogenic metabolism. More specifically, the invention relates to a dose regimen for said product combination comprising a first phase during which a first product is administered and which comprises three days of carbohydrate intake of not more than 20 g per day, and a second phase during which a second product is administered, comprising three days in which the product-related carbohydrate intake is not more than 2 g/kg body weight. In a preferred embodiment, the nutritional product combination is consumed by cancer patients before, while and after treatment and aims to support a positive therapeutic outcome.

## Description

### FIELD OF INVENTION

The present invention is in the field of medicine and relates to a nutritional product combination for use in the treatment of patients that require a physiological transition to a ketogenic metabolism and/or that require maintaining a ketogenic metabolism. In a preferred embodiment, the nutritional product combination is administered to cancer patients before, during and after treatment and aims to support a positive therapeutic outcome.

### BACKGROUND

The importance of energy production in cancer cells has already been observed by Otto Warburg in 1924, who noted high lactate concentrations that are not normally produced in cells performing glycolysis.

Glycolysis is the metabolic pathway in which glucose is converted into pyruvate and free energy that is used to form the high-energy compounds ATP (adenosine triphosphate) and NADH (reduced nicotinamide adenine dinucleotide). It occurs, with variations, in all organisms and has a determined sequence of ten enzyme-catalyzed reactions, the Embden-Meyerhof-Parnas- (EMP-) pathway. The intermediates of this pathway, provide entry points to glycolysis. Most monosaccharides, such as fructose and galactose, can be converted into one of these intermediates.

Multicellular organisms depend on the release of energy, which is possible either under aerobic conditions by fermentation ("anaerobic glycolysis") of glucose, or in the presence of oxygen, by oxidative phosphorylation of glucose (glycolysis). Oxidative phosphorylation is the more efficient pathway of energy production. However, it produces radicals which can lead to DNA damages.

Since radical production is completely prevented in fermentation, germ cells and stem cells (which carry DNA that is of particular importance) use this way of energy release. Moreover, since fermentation leads to the production of metabolites being able to neutralize radicals (e.g. pyruvate, lactic acid), fermentation is also used in cells exposed to a high level of radical production by sun light (retinal cells) or high oxygen concentration (endothelial cells). Only very recently it has been shown that also cancer (stem) cells can change their metabolism to fermentation (under aerobic conditions, called "Warburg effect"), which explains the observation of high lactate concentrations in cancer cells by Otto Warburg in 1924. Moreover, the switch from oxidative phosphorylation to fermentation induces mechanisms for single and double strand DNA repair, providing for an immediate explanation for the fact that often not all cells in a tumor mass can be removed by chemo- or radiation therapy: those tumor cells running on fermentation, e.g. potentially cancer stem cells, repair any DNA damages more efficiently than normal cells and have a higher likelihood of surviving a cancer therapy.

Although this metabolic switch complicates regular therapeutic interventions, the cancer cells that became resistant to e.g. chemotherapy, have the limitation that they strictly depend on glucose as their sole source of energy. In contrast to normal cells, they cannot switch to burning fat instead of glucose in order to produce energy, as their mitochondria have been deactivated or have become incapable of functioning.

Thus, ketogenic nutrition can have a positive influence on the outcome of cancer treatments such as e.g. radiation therapy, and there is a need for specific and controlled carbohydrate-/glucose- reduced diets for patients, especially also after treatment. A strategy for supporting cancer treatment consists in the production and specific administration of nutrition to patients, which releases only a small amount of glucose and the release occurs slowly during digestion. With the right dosage regimen for such nutrition, in order to allow for healthy cells in the body to adapt to the ketogenic metabolism, it can be an optimal support of cancer treatment.

Moreover, the rapid release of glucose in high concentration during the digestion of high-glycemic food makes a significant contribution toward the development of diverse severe diseases. For example, high concentrations of glucose in cells can lead to cell damage through "advanced glycation end products" (AGE) and radicals and the resulting cell damage significantly contributes toward long-term diabetic illnesses such as retinopathy, neuropathy, nephropathy and micro- and macrovascular damage. In addition, it can trigger diseases such as neurodegenerative diseases (e.g., Alzheimer's, Wernicke-Korsakoff syndrome, and dementia), endothelial cell damage and vascular damage (leading to myocardial infarction and stroke) as well as inflammatory diseases such as multiple sclerosis, Crohn's disease, ulcerative colitis, rheumatoid arthritis.

A strategy for preventing diseases that are triggered by excessively high glucose concentrations consists in the provision and administration of ketogenic nutrition in adequate dose regimen.

### SUMMARY OF THE INVENTION

The present invention relates to a nutritional product combination for use in the treatment of patients that require a physiological transition to a ketogenic metabolism and/or that require maintaining a ketogenic metabolism. Said product combination comprises a first product administered during a first phase, comprising three days of carbohydrate intake of not more than 20 g per day, and a second product administered during a second phase, comprising three days in which the product-derived carbohydrate intake is not more than 2 g/kg body weight.

The invention further relates to a method for the transition to and/or the maintenance of a ketogenic metabolism comprising the provision of a nutritional product combination which comprises a first nutritional product, comprising a fat and/or oil content that is at least twice the carbohydrate content by weight and includes omega-3 fatty acids and/or medium-chain triglycerides ("MCTs"), and a second nutritional product that has a glycemic index of less or equal to 35 (GI≤35) and comprises a mineral content of less than 500 mg/l and a sugar content of less than 25 g/l, wherein said sugar content comprises sugars, which deliver energy to the brain but do not increase blood sugar and insulin levels, and are contained in the product with a total amount of less than 9 g/l per sugar. The method also comprises the administration of said product combination in a specific dose regimen comprising the administration of the first nutritional product during a first phase comprising three days of a carbohydrate intake of not more than 20 g per day; followed by the administration of the second nutritional product during a second phase comprising three days of a product-derived carbohydrate administration to an individual of not more than 2 g/kg body weight.

The present invention further relates to a kit for the transition to and/or the maintenance of a ketogenic metabolism in an individual, comprising the first and second nutritional product according to the invention. Additionally, the invention relates to a nutritional kit for the use in supporting cancer therapy.

### DETAILED DESCRIPTION OF THE INVENTION

The present invention relates to a nutritional product combination for use in the treatment of patients that require a physiological transition to a ketogenic metabolism and/or that require maintaining a ketogenic metabolism. The nutritional product combination according to the invention comprises a first phase during which a first product is administered, comprising three days of carbohydrate intake of not more than 20 g per day, and a second phase during which a second product is administered, comprising three days in which the product-derived carbohydrate intake is not more than 2 g/kg body weight.

The inventors surprisingly found that the administration of two different nutritional products with their specific ingredients and specific dose regimen efficaciously prepares for, switches the metabolism of patients from a normal to a ketogenic one and maintains it, but without having the negative side-effects of a ketogenic diet. These negative side effects would occur with the administration of one product only, with a different composition or in a different dose regimen, i.e. only when used together, in the particular dose regimen according to the invention, the nutritional product combination can have its joint positive effect.

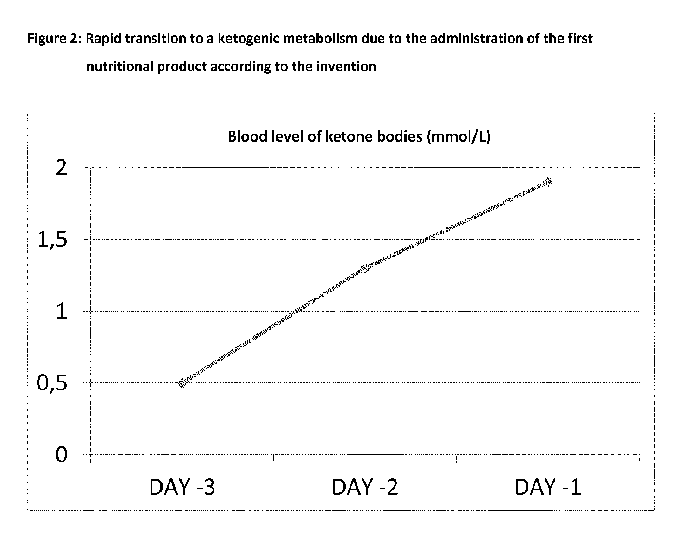

The switch in metabolism can be followed through the measurement of ketone body concentration in the urine of patients, with so-called keto-sticks. The effective and rapid increase in ketone bodies as a result of the specific administration of the first nutritive product according to the invention is shown in Figure 2.

In a preferred embodiment of the invention the nutritional product combination for use in the treatment of patients that require a physiological transition to a ketogenic metabolism and/or that require maintaining a ketogenic metabolism, comprises a first product that is administered during a first phase, comprising three days of carbohydrate intake of not more than 20 g per day, and a second product which is administered during which a second phase, comprising three days in which the product-derived carbohydrate intake is not more than 2 g/kg body weight.

In a preferred embodiment of the invention, the first nutritional product comprises a fat and/or oil content that is at least twice the carbohydrate content by weight and includes omega-3 fatty acids and/or medium-chain triglycerides ("MCTs"). MCTs promote the provision of ketone bodies and free medium-chain fatty acids, and can serve as alternative energy source in healthy cells of cancer patients, but not in tumor cells running on anaerobic glycolysis.

In a preferred embodiment of the invention, the second nutritional product is low in minerals and low in sugar.

The expression "low in sugar" signifies a content of no more than 2.5 g of sugar per 100 ml of fluid (in accordance with the revision of (EC) Regulation no. 1924/2006 of the European Parliament and of the Council of 20 December 2006 concerning nutritional value and health-based specifications of foodstuffs--Official Journal of the European Union L 12 of 18 Jan. 2007).

The expression "low in minerals" means low content of minerals in accordance with German "Mineral Water and Table Water Regulation of 1 Aug. 1984--Official Journal (BGB1.) I p. 1036, last amended by Article 1 of the Regulation of 1 Dec. 2006--Official Journal (BGB1.) I p. 2762, last amended by Article 1 of the Regulation of 1.12.2006--Official Journal (BGB1.) I p. 2762). The mineral substance content calculated as solid residue is no more than 500 mg/l of fluid.

Preferably the second nutritional product has a glycemic index of less or equal to 35 (GI≤35) and a mineral content of less than 500 mg/l and a sugar content of less than 25 g/l, wherein said sugar content comprises sugars, which deliver energy to the brain but do not increase blood sugar and insulin levels, and which are contained in the product with a total amount of less than 9 g/l per sugar.

As used herein, the term "minerals" refers to the sum of the dissolved mineral components, in particular magnesium and calcium, but also sodium, sulfate, potassium, silicic acid, chloride and fluoride, except for hydrogen carbonate and dissolved carbon dioxide.

The term "sugar" relates to sweet-tasting mono- di- and trisaccharides, such as sucrose, glucose, lactose, galactose, fructose, invert sugar, isomaltulose, maltose, melezitose, tagatose, trehalose, and ribose.

In a preferred embodiment of the invention, the first product comprises a fat and/or oil content of 5-35% weight/volume (wt/vol) and a maximum carbohydrate content of 2.5% weight/volume. Preferably, the fat and/or oil content is 10-35% wt/vol, more preferably 15-30% wt/vol and most preferably 25% wt/vol.

In a preferred embodiment, said fat and/or oil content comprises vegetable oils and a maximum of 30% wt/vol saturated fatty acids and minimum 20% wt/vol unsaturated fatty acids. Said unsaturated fatty acids are preferably comprising omega-3-fatty acids and omega-6-fatty acids, wherein the weight ratio of said omega-6 fatty acids to said omega-3 fatty acids is no greater than 4:1. Preferably, said ratio is lower than 3:1.

Due to the ratio of higher fat/oil content versus lower carbohydrate content - preferably the fat/oil content is at least twice or twice the carbohydrate content - the nutritional product provides an energy supply while being low in carbohydrates. This ensures that the patient will not suffer from nutrition deficiency during the administration of the product.

The presented invention has the surprising effect to efficaciously prepare for and switch the metabolism of patients slowly but completely from normal to a ketogenic one. This is obtained through the provision of the specific ingredients in the first and second nutritional product in their preferred proportions and only in combination with the specific administration of the nutritional product combination according to the invention. The switch to a ketogenic metabolism has to start subtle in order to keep the patient's body in balance and to slowly allow for adaption. However, once started, the switch needs to be complete in order for the invention to perform its positive effects. After the patient's metabolism has switched, the ketogenic situation can be maintained and the notable positive effects are exhibited, but only if the patient stays on a low-glycemic diet. This however needs to be in a balanced fashion, without side-effects, so that the patient does not suffer from nutritive deficiencies. The effective but slow transition to a ketogenic metabolism and afterwards the balanced maintenance of it is ensured with the provision and administration of the product combination according to the invention.

Due to its relatively high content of essential fatty acids, the nutritional product combination provides a considerable source of essential biosynthetic components which cannot be produced by the body itself. The required ratio of omega-6-fatty acids to omega-3-fatty acids may reduce the negative effects associated with excess omega-6-fatty acids. Excessive levels of omega-6-fatty acids to omega-3-fatty acids increase the possibility of a number of diseases such as inflammatory diseases. In certain embodiments, processes associated with these diseases may be inhibited. Therefore the nutritional is not only suitable for patients prior to cancer treatment but also for patients suffering from inflammatory diseases (Ulcerative colitis, rheumatism, multiple sclerosis), from diabetes and associated chronic diabetes complications (retinopathy, neuropathy, nephropathy, micro- and macrovascular damages e.g. blood vessel damages, myocardial infarction), from neurodegenerative diseases (Alzheimer's, Wernicke-Korsakoff Syndrome).

In another preferred embodiment of the invention, the first product comprises a lactic acid content of at least 0.3% wt/vol.

The amount of lactic acid in the nutritional product exerts an inhibitory effect of the fermentation process from glucose to lactate (biochemically referred to as end product inhibition). Furthermore the lactic acid cannot be used in the TKTL1 (Transketolase-like-1) -metabolism pathway for energy production because lactic acid is not a suitable substrate for that metabolism. Therefore the nutritional product of the present invention is especially suitable for patients who suffer from a type of cancer associated with an activated TKTL1-glucose metabolism.

The content of lactic acid in the beverage provides the additional advantage that lactic acid positively effects the flora of the intestine of the consumer, as it prevents acidification through the generation of bases and through the provision of energy for epithelia cells of the intestine, heart, liver and kidney.

The content of lactic acid should be preferably at least 0.3% wt/vol, more preferably from 1 to 2% wt/vol, for example 1.4% wt/vol.

It is most preferred that the first product contains 1.3 g of lactic acid per 100 ml product. These amounts ensure on the one hand, that the positive properties of lactic acid are apparent and on the other hand that the taste of the beverage is not affected.

The lactic acid may be present in both the L and D forms (levorotatory L-(+)-lactic acid and dextrorotatory D-(-)-lactic acid), so that the formation of L-lactic acid via the Embden-Meyerhof pathway and the pentose phosphate pathway and the formation of D-lactic acid via the methylglyoxal pathway are inhibited. A higher levorotatory L-(+)-lactic acid content is preferable up to an approximately equal volume ratio of D- and L-lactic acid to one another.

In a preferred embodiment of the invention, the first product comprises a maximum carbohydrate content of 2.5% wt/vol but more preferably has a maximum carbohydrate content of 2.3%, 1.8%, 1.7%, or 1.6% wt/vol. For example, the carbohydrate content can be 2.3%, 1.8%, 1.7%, or 1.6% wt/vol.

Thus, the inventive nutritional product combination is also suitable for reducing or even preventing the cell damage associated with high glucose concentrations. High glucose concentrations significantly contribute, among others, toward neurodegenerative diseases, long-term diabetic damage and micro- and macro vascular damage.

The present invention also relates to a nutritional product combination, wherein the first product is characterized in that it comprises 20 to 40 % wt/vol of ketogenic amino acids. Preferably, the ketogenic amino acids are threonine, phenylalanine, tyrosine, tryptophan, isoleucine, lysine, leucine, or a mixture thereof.

The pH value of the first nutritional product should preferably be equal to or less than pH 4.5. This is associated with the advantage that stability and storage life of the beverage are increased and that it has a slight sour taste which the consumers experience as refreshing.

One object of the present invention is also to provide a sweet tasting second nutritional product that allows patients to pass over to a normal metabolism after the first phase according to the invention, while staying on a low-glycemic diet. The product should counterbalance a lack of fluid in the body without simultaneously supplying high quantities of minerals to the body. It should also satisfy the indulgent need for sweet and refreshing beverages, e.g. after three days of low-carbohydrate diet in a transition to a ketogenic metabolism, without supplying harmful acids and sugars to the body in a form which causes a sharp rise in the insulin concentration in the blood and which, in the most negative case, can lead to insulin-induced hypoglycemia and to a lack of energy after consumption.

A solution to this problem is the provision of a second nutritional product comprising a content of gluconic acid that is at least 0.3 wt/vol %, a content of minerals that is less than 250 mg/liter (0.025 wt/vol %), and a content of sugars that comprises a fraction of galactose that is at least 10 weight-weight (wt/wt) % based on the content of sugars, wherein said content of sugars additionally comprises a content of tagatose and/or trehalose.

In a preferred embodiment of the invention, said second nutritional product has a content of minerals of less than 150 mg per liter.

Due to the low mineral content of this nutritional product, the body's need for fluid can be satisfied without disturbing the existing mineral balance and without altering the existing blood sugar level in such a way that there is a rise of the insulin concentration in the blood. Accordingly, the nutritional product is also well suited as a nutrition or dietary supplement in the preventative or therapeutic treatment of illnesses from the group comprising: celiac disease, type 2 diabetes mellitus, neurodegenerative diseases, in particular Alzheimer's disease, tumors, and illnesses that lead to cachexia (wasting syndrome), which accompany inflammatory processes or are caused thereby, in particular rheumatism, rheumatoid arthritis, inflammatory intestinal diseases such as ulcerative colitis and Crohn's disease, and intestinal diseases such as leaky-gut syndrome.

In the second nutritional product according to the invention, the content of sugars comprises a fraction of galactose that is at least 10 wt/wt %. In contrast to glucose, galactose is transported into the cells independent of insulin. The glycemic index (GI) of galactose is very low (GI=20) compared to sucrose (GI=65) and glucose (GI=100). By contrast, the sweetness of galactose is at least half of the sweetness of glucose or sucrose: based on sucrose, a 10% D-galactose solution has a sweetness of 63%. Due to its suitability as a catabolic substrate, i.e. as a supplier of energy, galactose is particularly advantageous for patients with insulin resistance and whose glucose-dependent nerve cells, in particular in the brain, suffer from an undersupply of sugar despite of high blood sugar levels. This is the case for example, in patients suffering from Alzheimer's disease. By administering galactose or galactose-containing nutrition, such patients can be supplied with glucose indirectly in a manner independent of insulin. Galactose is channeled into the nerve and brain cells via GluT-3 transporters independent of insulin, and is converted into glucose there. In healthy individuals, the intake of galactose may lead in the long term to higher muscular and cognitive ability. Galactose, as well as the other sugars contained in preferred embodiments of the invention as further described below, causes only a relatively low insulin output after consumption and leads to an increase in fat burning and mitochondrial activity, which is particularly advantageous for overweight individuals. In addition, hypoglycemic states and ravenous hunger attacks are avoided as a result of the low insulin output. Galactose and sugars such as trehalose, and tagatose are therefore very well suited as a sugar component in the diet of individuals who have to control their weight or who have to lose excess weight.

Moreover, it has been shown by Otto Warburg that the fermentation metabolism of cancer cells progresses most effectively with glucose as a food substrate, specifically at a rate of 23.9 consumed units per unit of time, whereas, with the substrate fructose, it progresses at a rate of 3.3, and with galactose, it progresses even less effectively at a rate of 1.3. This implies that cancer cells, provided with galactose instead of glucose, have a drastically reduced fermentation metabolism and consequently a reduced growth rate. Thus, galactose is an ideal key sugar in the diet of cancer patients, and as such selected to be included in the sugar content of the second nutritional product according to the invention.

In a preferred embodiment of the present invention, the second nutritional product also includes tagatose and/or trehalose as sugars.

Tagatose is a naturally occurring monosaccharide, which can also be produced from galactose by means of isomerization. Tagatose has a low glycemic index of GI=3 and a sweetness of approximately 97% based on sucrose, but has a much lower energy content than sucrose because it is digested by the human body only to an extent of approximately 20%. The remaining 80% of the tagatose are broken down by the intestinal flora, wherein, within others, butyrate is formed. Butyrate is known to be able to control the sugar metabolism of cancer cells and can have an inhibitory effect on their growth. In addition it can also trigger their death by apoptosis. (Int J Cancer. 2010 Aug. 16. Butyrate elicits a metabolic switch in human colon cancer cells by targeting the pyruvate dehydrogenase complex.)

Trehalose is a natural disaccharide with approximately 50% of the sweetness of sucrose and a glycemic index of ca. GI=32. Just like isomaltulose, trehalose is broken down first in the human small intestine and then causes a low insulin output.

The nutritional product according to the invention comprises a content of gluconic acid that is at least 0.3 wt/vol %, which causes the fresh, slightly acidic taste thereof. Thus, it acts similarly to phosphoric acid, but without causing the disadvantages known for phosphoric acid. In contrast to phosphoric acid, gluconic acid is an organic, mild acid product of the carbohydrate metabolism and the human metabolism can provide energy slowly and constantly from it. By contrast, phosphoric acid does not provide energy, but damages the body due to the strong acid properties. Additionally it stresses the mineral balance of the body since the quantity of phosphate received via phosphoric acid has to be eliminated again. In contrast, gluconic acid is broken down completely into water and carbon dioxide in the human body and does not stress its mineral balance, as it contains no minerals.

In one preferred embodiment according to the invention, the first and second nutritional products are both free of phosphoric acid.

In a preferred embodiment, the nutritional product combination according to the invention additionally contains fruit juices or fruit juice extracts.

In another preferred embodiment of the present invention, the nutritional product combination includes sugar-substitutes and/or natural and artificial sweeteners. These can be e.g. polyols such as erythritol.

In a preferred variant, a content of Stevia (genus: Stevien, family: asteraceae) is provided. The leaves of these plants contain the diterpene glycoside stevioside, which has up to 300 times the sweetness of sugar, protects the teeth against caries and does not influence the insulin level.

In a further embodiment of the nutritional product combination according to the invention, it has content of caramel coloring and a content of natural flavorings and has a cola-like taste.

The flavorings are preferably extracts from Mentha arvensis and/or coca leaf and/or galangal and/or ginger and/or cardamom and/or kola nut and/or cocoa and/or lime and/or mace and/or clove and/or orange and/or pine and/or mustard seed and/or licorice and/or vanilla and/or lemon and/or cinnamon.

The second nutritional product according to the invention may additionally have a content of vitamin E in the form of a tocotrienol-tocopherol mixture from natural sources. Vitamin E in the form of the alpha-tocopherol is known for the fact that it very effectively suppresses the formation of reactive oxygen species ("ROS") or what are known as oxygen radicals or neutralizes produced oxygen radicals/ROS (Diabetes. 1996 September;45(9):1233-7).

The second nutritional product may also have an additional content of secondary plant substances ("SPS") and may preferably contain one or more members of the following group: glucosinolates, carotenoids, lectins, flavonoids, phytosterols, polyphenols, in particular curcumin, ellagic acid, quercetin, resveratrol, delphinidin, diallyl sulfide, epigallocatechin-3-gallate, genistein, indol-3-carbinol, isoterpene, limonene, lycopene, OPC, salvestrol, and sulforaphane.

In a preferred embodiment according to the invention, the second nutritional product comprises an additional content of CO2-extracted flavorings, in particular from raspberry and/or kiwi and/or rose hip and/or ginger and/or elder and/or lychee.

The second nutritional product may also have an additional content of vitamin D, which has been shown to have a strong anti-cancer effect.

In order to increase mitochondrial energy production and fat burning and to simultaneously inhibit the undesirable fermentation in cancer cells, the second nutritional product may additionally have a content of carnitine and/or creatine.

In order to meet the consumer's need for a stimulating beverage, one embodiment of the second nutritional product has a content of caffeine and/or of an extract containing caffeine. Caffeine is preferably added in the form of extracts from natural sources, such as guarana. This ensures the continuous release of the active substance caffeine in the body over a relatively long period of time.

In a preferred embodiment of the invention, the nutritional product combination is administered to patients in preventive or therapeutic treatment of illnesses from the group comprising cancer, neurodegenerative diseases, in particular Alzheimer's disease, diabetes, celiac disease, diseases accompanied by inflammatory processes such as rheumatism, rheumatoid arthritis, ulcerative colitis, Crohn's disease, intestinal diseases such as leaky-gut syndrome, and illnesses that lead to cachexia.

In a further preferred embodiment, the present invention comprises a nutritional product combination for use in the treatment of cancer patients. The treatment comprises radiation therapy, chemotherapy, Immunotherapy, targeted therapy, and hormone therapy.

In a preferred embodiment, the present invention addresses the problem of tumor cell resistance to therapeutic approaches and offers a strategy to support treatment by providing a doses regimen for a nutritional product combination that is consumed by cancer patients before, during and after treatment.

Preferably, the first nutritional product is given to a patient prior to cancer treatment and the second product is given to the cancer patient following the treatment.

Preferably, the first product is given to the patient for at least three days prior to cancer treatment and the second product is given to the patient for at least three days, starting the day of treatment.

More preferably, the patient substitutes one meal by the consumption of the first product five days prior to treatment, and substitutes two meals by consuming the first product on the fourth day prior to treatment. Most preferably, the three days prior to treatment, all meals are substituted by the first nutritional product.

On the day of therapy, the patient's longing for sugar and sweet-taste is especially high as the brain does not receive a lot of glucose while running on a ketogenic metabolism. Hence, it is particularly helpful for patients to receive some 'sweet-taste' with the consumption of the second product the day of treatment, while staying at a low-glycemic level and maintaining a ketogenic metabolism. The second product does not contain glucose itself as sweetener, but galactose and other sugars (see description above). This is extremely important as the cancer cells are indeed damaged after treatment (oxidative damages), though it might be possible that a part of them recovers when receiving an excess of glucose.

The specific provision and administration of the nutritional product combination during cancer therapy has the surprising effect to subtly prepare for, but then completely switch the metabolism of cancer patients from normal to a ketogenic one and to maintain it without causing nutritional deficiencies in the patient, while exerting its positive, tumor cell damaging effect. Thus, the nutritional product combination according to the invention has a surprising positive effect on the outcome of cancer therapy.

In one embodiment of the invention, the administration doses of the nutritional product combination are adapted according to the weight of a patient. This means for example that at the day of cancer treatment, a child is administered only 3/4^{th} doses of the first product and have doses of the second product compared to a tall male individual.

In a preferred embodiment of the invention, the patient receives a product related intake of carbohydrates comprising 2 g/kg bodyweight per day during the second phase, in addition other low-glycemic nutrition, and thus stays at a low-glycemic level while slowly passing over to a normal diet, i.e. normal metabolism, after treatment.

In a preferred embodiment of the invention, the first nutritional product can be consumed diluted with water, unsweetened coffee, espresso or tea. It can also be sweetened with tagatose, erythritol or erylite stevia. To change the taste, natural spices such as cacao, vanilla, pepper or curry powder can be added.

In one embodiment, the first nutritional product can be heated up to 50 degree Celsius and consumed in form of a soup. For this it can be flavored with herbs, tomato- or pepper paste.

In a preferred embodiment of the invention, the second nutritional product can be consumed from the day of therapy onwards, in addition to the first nutritional product and in addition to other low-carbohydrate food and drinks. Preferably, it is consumed cooled.

It is also preferred that the second nutritional product is consumed for any time after the acute therapeutic phase in support of a healthy carbohydrate-low-diet. This is advantageous for the prevention and dietary support of multiple diseases associated with high glucose concentrations such as diabetes. The daily amount of 2 g/kg bodyweight of product related carbohydrate intake should not be exceeded.

The present invention also relates to a method for the transition to and/or the maintenance of a ketogenic metabolism comprising the provision and specific administration of a nutritional product combination. Said nutritional product combination comprises a first nutritional product which comprises a fat and/or oil content that is at least twice the carbohydrate content by weight and includes omega-3 fatty acids and/or medium-chain triglycerides ("MCTs") and a second nutritional product that has a glycemic index of less or equal to 35 (GI≤35) and comprises a mineral content of less than 500 mg/l and a sugar content of less than 25 g/l, wherein said sugar content comprises of special sugars, which deliver energy to the brain but do not increase blood sugar and insulin levels, and are contained in the product with a total amount of less than 9 g/l per sugar. Moreover, the method comprises the administration of said product combination in a specific dosage regimen which comprises the administration of the first nutritional product during a first phase comprising three days of a carbohydrate intake of not more than 20 g per day; followed by the administration of the second nutritional product during a second phase comprising three days of a product-related carbohydrate administration to an individual of not more than 2 g/kg body weight.

In a preferred embodiment of the method according to the invention, said administration is carried out before, during and after the therapeutic cancer treatment.

Preferably, in said method the first product is administered for at least three days prior to treatment, and the second product is administered for at least three days, starting the day of treatment.

Also preferred is the use of said method in cancer treatment comprising radiation therapy, chemotherapy, Immunotherapy, targeted therapy, and hormone therapy.

In the method, said first and second product comprise any of the embodiments described before.

The presented invention also comprises a nutritional kit for the use in cancer therapy, comprising a first nutritional product comprising a fat and/or oil content that is at least twice the carbohydrate content by weight and includes omega-3 fatty acids and/or medium-chain triglycerides ("MCTs") and that is administered to a patient for at least three days prior to cancer treatment, and a second product that has a glycemic index of less or equal to 35 (GI≤35) and comprises a mineral content of less than 500 mg/l and a sugar content of less than 25 g/l, wherein said sugar content comprises sugars, which deliver energy to the brain but do not increase blood sugar and insulin levels, and which are contained in the product with a total amount of less than 9 g/l per sugar, and which is administered to a patient for at least three days, starting the day of cancer treatment.

The first and second product of the nutritional kit for the use in cancer therapy comprise any of the embodiments as described before in the document.

The claimed invention also relates to a nutritional kit for the transition to and/or the maintenance of a ketogenic metabolism in an individual, comprising a first nutritional product comprising a fat and/or oil content that is at least twice the carbohydrate content by weight and includes omega-3 fatty acids and/or medium-chain triglycerides ("MCTs"), and a second product that is characterized in that it has a glycemic index of less or equal to 35 (GI≤35), and comprises a mineral content of less than 500 mg/l and a sugar content of less than 25 g/l, wherein said sugar content comprises of sugars, which deliver energy to the brain but do not increase blood sugar and insulin levels, and which are contained in the product with a total amount of less than 9 g/l per sugar.

In a preferred embodiment of the nutritional kit, the first product is administered to an individual during a first phase comprising three days of carbohydrate intake of not more than 20 g per day.

In another preferred embodiment or the nutritional kit, the second product is administered to an individual during a second phase comprising at least three days of product-derived carbohydrate intake of not more than 2 g/kg body weight per day.

The first and second product of the nutritional kit for the transition to and/or the maintenance of a ketogenic metabolism in an individual comprise any of the embodiments as described before in the document.

### EXAMPLES

The following examples and figures are used to illustrate the invention. Although the invention is described in detail, it is to be clearly understood that the same is by way of illustration and example, and is not to be taken by way of limitation.

The quantities specified in the formulations are applicable per 100 millilitres of beverage.

### Example 1: Exemplary nutritional information and ingredients for the first nutritional product

### Nutritional information per 100 ml: amount

| | |
|---|---|
| Calories | 828 kJ |
| | 200 kcal |
| Fat | 16.80 g |
| of which are saturated fatty acids | 4.60 g |
| of which are unsaturated fatty acids | 8.50 g |
| of which are multiple unsaturated fatty acids | 3.70 g |
| Carbohydrate | 1.60 g |
| of which are sugars | 0.20 g |
| Fiber content | 3.10 g |
| Protein | 7.40 g |
| Salt | 0.23 g |

### Vitamines

| | |
|---|---|
| Vitamine A | 174 µg |
| Vitamine C | 14.40 mg |
| Vitamine D | 160 µg |
| Vitamine E | 7.10 mg |
| Vitamine K | 11.20 µg |

### Minerals

| | |
|---|---|
| Folic acid | 55 µg |
| Magnesium | 0 mg |
| Iron | 3.40 mg |
| Zinc | 2.10 mg |
| Selenium | 15 µg |
| Chromium | 9.20 µg |

### Contains per 100 ml:

| | |
|---|---|
| Lactate | 1.30 g |
| MCT | 3.50 g |
| Omega-3-fatty acids | 1 g |
| Omega-6-fatty acids | 2.60 g |
| Tocopherole | 8.90 mg |
| Tocotrienole | 10.50 mg |
| Vitamine K1 | 7.10 µg |
| Vitamine K2 | 4.10 µg |

### Example 2: Exemplary nutritional information and ingredients for the second nutritional product

### Nutritional information per 100 ml:

| | |
|---|---|
| Calories | 49 kJ (11 kcal) |
| Fat (g) | 0 |
| Carbohydrates (g) | 2.4 |
| of which are sugars (g) | 2.4 |
| Protein (g) | 0 |
| Salt (g) | 0 |

### Ingredients:

Water, 0.8 % Galactose, 0.8 % Tagatose, 0.8 % Trehalose*, carbonic acid, gluconic acid as acid regulator, natural flavors (contain mustard), colouring: E150d, acidifiers: citric acid, sweeteners: steviolglycoside and sucralose.
*Trehalose is a source of glucose

### Example 3: Product 2--Refreshing Beverage--Low in Minerals

### Ingredients:

0.4% gluconic acid
1 g galactose
0.4 g isomaltulose
0.9 g tagatose
1% chokeberry juice--partly fermented into gluconic acid

**Example 4: Product 2--Refreshing Fruit Juice Beverage, Blackcurrant**

### Ingredients:

0.3% gluconic acid
0.9 g galactose
0.3 g isomaltulose
1 g tagatose
0.7% chokeberryjuice--partly fermented into gluconic acid
0.6% blackcurrant juice--partly fermented into gluconic acid

### Example 5: Product 2--Refreshing Fruit Juice Beverage, Mixed Fruits

### Ingredients:

0.6% gluconic acid
0.8 g galactose
0.2 g isomaltulose
1.0 g tagatose
0.3% blackcurrant juice--partly fermented into gluconic acid
0.3% cherry juice-partly fermented into gluconic acid
0.3% pear juice--partly fermented into gluconic acid
0.05% CO2 ginger extract (lemon flavor)
carbon dioxide

### Example 6: Product 2--Refreshing Fruit Juice Beverage, Ginger and Orange

### Ingredients:

0.3% gluconic acid
0.5 g galactose
0.2 g isomaltulose
1.5 g tagatose
1% orange juice--partly fermented into gluconic acid
0.05% CO2 ginger extract (lemon flavor)
1% MCT
carbon dioxide

### Example 7: Product 2--Refreshing Fruit Juice Beverage, Raspberry and Blackcurrant I

### Ingredients:

1.3% gluconic acid
0.7 g galactose
0.3 g isomaltulose
2.3% chokeberry juice--partly fermented into gluconic acid
2.3% blackcurrant juice--partly fermented into gluconic acid
0.05% CO2 raspberry extract (rich in omega-3 fatty acids)
1.2% MCT
carbon dioxide

### Example 8: Product 2--Refreshing Fruit Juice Beverage, Raspberry and Blackcurrant II

### Ingredients:

1.3% gluconic acid
0.7 g galactose
0.3 g isomaltulose
1.2% tagatose
0.3% chokeberry juice--partly fermented into gluconic acid
0.3% blackcurrant juice--partly fermented into gluconic acid
0.05% CO2 raspberry extract (rich in omega-3 fatty acids)
1.2% MCT
carbon dioxide
0.5% natural flavors from Mentha arvensis and galangal and ginger and cardamom and kola nut and lime and mace and clove and orange and pine and mustard seed and licorice and vanilla and lemon and cinnamon

### Example 9: Product 2--Cola Beverage

### Ingredients:

2.5% gluconic acid
0.6 g galactose
0.3 g isomaltulose
1.3% tagatose
3% caramel flavoring
0.5% natural flavors from Mentha arvensis and galangal and ginger and cardamom and kola nut and lime and mace and clove and orange and pine and mustard seed and licorice and vanilla and lemon and cinnamon.
carbon dioxide

### FIGURE LEGEND

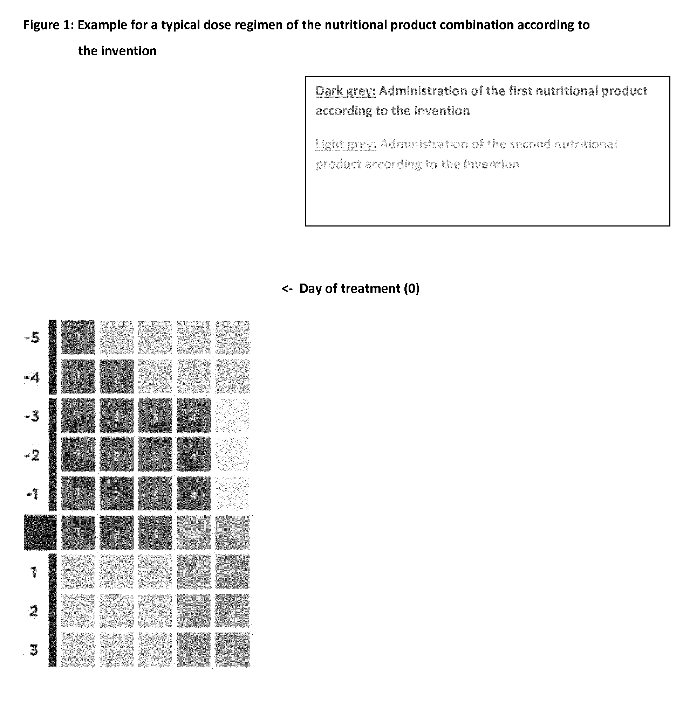

**Figure 1****: Example for a typical dose regimen of the nutritional product combination according to the invention**
   In Figure 1, a square indicates one meal. Numbered squares refer to the substitution of a meal with the first (dark grey) or the second (light grey) nutritional product according to the invention.
   **Transition phase (Day -5 and -4):** On the first day of administration (-5), the first nutritional product according to the invention substitutes one meal. On the second day (-4), two meals are substituted by the first product.
   **Before therapy (day -3 to -1):** In the three-day phase before cancer treatment, the nutrition of the patient consists only of the first nutritional product according to the invention and is consumed four times a day. This serves as transition to a ketogenic metabolism.
   **Day of therapy (day 0):** The patient receives three times the first nutritional product according to the invention and twice the second nutritional product according to the invention.
   **After therapy (day 1 to 3):** After cancer treatment, the patient is recommended to take the second nutritional product twice a day in addition to a strict low-carbohydrate diet in order to maintain a ketogenic metabolism. Thus, a direct transition into a metabolism with increased blood sugar and insulin levels is avoided and a slow transition is managed.
**Figure 2****: Transition to a ketogenic metabolism**
   After the administration of the nutritional product combination according to the invention, the level of ketone bodies in the blood increases rapidly in the patient. This indicates the effective transition into a ketogenic metabolism and can be measured easily with Keto sticks in the urine of the patient.

## Claims

1. Nutritional product combination for use in the treatment of patients that require a physiological transition to a ketogenic metabolism and/or that require maintaining a ketogenic metabolism comprising
a) a first phase during which a first product is administered, comprising three days of carbohydrate intake of not more than 20 g per day
b) a second phase during which a second product is administered, comprising three days in which the product-related carbohydrate intake is not more than 2 g/kg body weight.

2. The nutritional product combination according to claim 1, wherein the first nutritional product comprises a fat and/or oil content that is at least twice the carbohydrate content by weight and includes omega-3 fatty acids and/or medium-chain triglycerides ("MCTs"), and wherein the second nutritional product, has a glycemic index of less or equal to 35 (GI≤35) and a mineral content of less than 500 mg/l and a sugar content of less than 25 g/l, wherein said sugar content comprises sugars, which deliver energy to the brain but do not increase blood sugar and insulin levels, and which are present in the product with a total amount of less than 9 g/l per sugar.

3. The nutritional product combination of any of the claims 1 and 2, wherein the fat and/or oil content of the first product comprises vegetable oils and a maximum of 30% weight/volume saturated fatty acids and a minimum 20% weight/volume unsaturated fatty acids, said unsaturated fatty acids comprising omega-3-fatty acids and omega-6-fatty acids, wherein the weight ratio of said omega-6 fatty acids to said omega-3 fatty acids is no greater than 4:1.

4. The nutritional product combination of any of the claims 1 to 3, wherein the first product is **characterized in that** it comprises 20 to 40% weight/volume of ketogenic amino acids.

5. The nutritional product combination of any of the claims 1 to 4, wherein the first product comprises a lactic acid content of at least 0.3% weight/volume.

6. The nutritional product combination of any of the claims 1 to 5, wherein the first product has a pH of less than or equal to pH 4.5.

7. The nutritional product combination of any of the claims 1 to 6, wherein the second product comprises:
a) a content of gluconic acid that is at least 0.3 weight/volume %, and content of minerals that is less than 250 mg/liter, and
b) a content of sugars that comprises a fraction of galactose that is at least 10 weight/weight % based on the content of sugars, said content of sugars additionally comprising a content of tagatose and/or trehalose.

8. The nutritional product combination of claim 7, wherein the content of minerals in the second product is less than 150 mg per liter.

9. The nutritional product combination of any of the previous claims, wherein the first and second product are free of phosphoric acid.

10. The nutritional product combination of any of the previous claims, wherein said patients comprise those in preventive or therapeutic treatment of illnesses from the group comprising cancer, neurodegenerative diseases, in particular Alzheimer's disease, diabetes, celiac disease, diseases accompanied by inflammatory processes such as rheumatism, rheumatoid arthritis, ulcerative colitis, Crohn's disease, intestinal diseases such as leaky-gut syndrome, and illnesses that lead to cachexia.

11. The nutritional product combination according to claim 10, wherein the cancer treatment of the patient comprises radiation therapy, chemotherapy, immunotherapy, targeted therapy, and hormone therapy.

12. The nutritional product combination according to claim 11, wherein the first product is administered to the patient for at least three days prior to cancer treatment.

13. The nutritional product combination according to any of the claims 10 to 12, wherein the second product is administered to the patient for at least three days, starting on the day of treatment.

14. Method for the transition to and/or the maintenance of a ketogenic metabolism comprising
a) the provision of a nutritional product combination comprising
a first nutritional product comprising a fat and/or oil content that is at least twice the carbohydrate content by weight and includes omega-3 fatty acids and/or medium-chain triglycerides ("MCTs"), and
a second nutritional product that has a glycemic index of less or equal to 35 (GI≤35) and comprises a mineral content of less than 500 mg/l and a sugar content of less than 25 g/l, wherein said sugar content comprises sugars, which deliver energy to the brain but do not increase blood sugar and insulin levels, and are contained in the product with a total amount of less than 9 g/l per sugar;
b) the administration of said product combination in a specific dose regimen comprising the administration of the first nutritional product during a first phase comprising three days of a carbohydrate intake of not more than 20 g per day; followed by the administration of the second nutritional product during a second phase comprising three days of a product-derived carbohydrate administration to an individual of not more than 2 g/kg body weight.

15. Method according to claim 14, wherein said administration of the nutritional product combination is carried out before, during and after the therapeutic cancer treatment.

16. Method according to claim 15, wherein the first product is administered for at least three days prior to treatment, and the second product is administered for at least three days, starting the day of treatment.

17. Method according to any of the claims 15 and 16, wherein said cancer treatment comprises radiation therapy, chemotherapy, Immunotherapy, targeted therapy, and hormone therapy.

18. Nutritional kit, for the use in cancer therapy, comprising
a) a first nutritional product comprising a fat and/or oil content that is at least twice the carbohydrate content by weight and includes omega-3 fatty acids and/or medium-chain triglycerides ("MCTs") and that is administered to a patient for at least three days prior to cancer treatment, and
b) a second product that has a glycemic index of less or equal to 35 (GI≤35) and comprises a mineral content of less than 500 mg/l and a sugar content of less than 25g/l, wherein said sugar content comprises sugars, which deliver energy to the brain but do not increase blood sugar and insulin levels, and which are contained in the product with a total amount of less than 9 g/l per sugar, and which is administered to a patient for at least three days, starting on the day of cancer treatment.

19. Nutritional kit, for the transition to and/or the maintenance of a ketogenic metabolism in an individual, comprising
a) a first nutritional product comprising a fat and/or oil content that is at least twice the carbohydrate content by weight and includes omega-3 fatty acids and/or medium-chain triglycerides ("MCTs")
b) a second product that is **characterized in that** it has a glycemic index of less or equal to 35 (GI≤35), and comprises a mineral content of less than 500 mg/l and a sugar content less than 25 g/l, wherein said sugar content comprises sugars, which deliver energy to the brain but do not increase blood sugar and insulin levels, and which are contained in the product with a total amount of less than 9 g/l per sugar.

20. Nutritional kit according to claim 19, wherein the first product is administered to an individual during a first phase comprising three days of carbohydrate intake of not more than 20 g per day.

21. Nutritional kit according to any of the claims 19 and 20, wherein the second product is administered to an individual during a second phase comprising at least three days of product-derived carbohydrate intake of not more than 2 g/kg body weight per day.
